# EUROPEAN PATENT APPLICATION

(11) **EP 4 542 297 A1**
(43) Date of publication of application: **23.04.2025**
(21) Application number: 23822740.9
(22) Date of filing: 29.03.2023
(51) Int. Cl.: G02F 1/153

(54) **ELECTROCHROMIC FILM AND COLOR-CHANGING GLASS**

(30) Priority: 16.06.2022 CN 202210686231
(71) Applicant: Guangyi Intelligent Tech (Suzhou) Co., Ltd., Suzhou, Jiangsu 215000 (CN)
(72) Inventor: WANG, Weishu, Suzhou, Jiangsu 215000 (CN)
(74) Representative: KIPA AB
(86) International application number: PCT/CN2023/084717
(87) International publication number: WO 2023/241169

(57) **Abstract**

An electrochromic film (100) and an electrochromic glass. The electrochromic film (100) includes a first conductive substrate (110), an electrochromic layer (120), and a second conductive substrate (130) laminated sequentially; an orthographic projection of the first accommodating groove (111) onto a plane where the electrochromic layer (120) is located overlaps with at least one third accommodating groove (121), and the first accommodating groove (111) and the third accommodating groove (121) are in communication with each other to form a first groove (140); an orthographic projection of the second accommodating groove (131) onto the plane where the electrochromic layer (120) is located overlaps with at least one third accommodating groove (121), and the second accommodating groove (131) and the third accommodating groove (121) are in communication with each other to form a second groove (150); and a width of the first groove (140) and a width of the second groove (150) are both a, and a distance between orthographic projections of any adjacent the first groove (140) and the second groove (150) onto the plane of the electrochromic layer (120) is b, and 0<a+b≤ 100mm. A necessary space is provided at the edge of the electrochromic film (100) through the first groove (140) and the second groove (150), so as to greatly reduce or avoid wrinkles at the edge of the electrochromic film (100), thereby the aesthetics of the electrochromic film (100) is improved.

## Description

The present application claims priority of Chinese application No. 202210686231.7, filed on June 16, 2022, entitled "electrochromic film and electrochromic glass"; the entire contents of which are incorporated herein by reference.

### TECHNICAL FIELD

The present application relates to the field of electrochromism, and more specifically to an electrochromic film and an electrochromic glass.

### BACKGROUND

Electrochromism is the phenomenon in which the optical properties (reflectivity, transmittance, absorption rate, etc.) of a material undergo stable and reversible color changes under the action of an external electric field, manifested as reversible changes in color and transparency in appearance.

The prior electrochromic film can be bent to meet the demands of curved surfaces and other scenarios. However, in some application scenarios, such as the sunroof glass of vehicles, not only the electrochromic film needs to be bent on one side, but it also needs to be bent on both sides or multiple sides, which makes the electrochromic film prone to wrinkle, and more wrinkles tend to appear especially at the edges of the electrochromic film. This not only makes it difficult for users to accept the appearance thereof, but also leads to a visual experience deterioration.

### TECHNICAL PROBLEMS

An object of the present application is to overcome the shortcomings above mentioned and provide an electrochromic film and an electrochromic glass.

### SUMMARY

An aspect of the present application provides an electrochromic film, which includes a first conductive substrate, an electrochromic layer, and a second conductive substrate laminated sequentially; an edge of the first conductive substrate is provided with a first accommodating groove, an edge of the second conductive substrate is provided with a second accommodating groove, and an edge of the electrochromic layer is provided with two or more third accommodating grooves; an orthographic projection of the first accommodating groove onto a plane where the electrochromic layer is overlapped with at least one third accommodating groove, and the first accommodating groove and the third accommodating groove are in communication with each other to form a first groove; an orthographic projection of the second accommodating groove onto the plane where the electrochromic layer is overlapped with at least one third accommodating groove, and the second accommodating groove and the third accommodating groove are in communication with each other to form a second groove; the first groove and the second groove are alternately arranged at an edge of the electrochromic film; and both the width of the first groove and the width of the second groove are a, and a distance between orthographic projections of any adjacent first groove and second groove onto the plane of the electrochromic layer is b, wherein a sum of the a and the b satisfies a following relationship: 0<a+b≤100mm.

In one aspect of the present application, the first groove and the second groove are alternately arranged at the edge of the electrochromic film, so that the electrochromic film is provided with a necessary space for bending through the first groove and the second groove during the bending process of the electrochromic film, so as to greatly reduce or avoid wrinkles at the edge of the electrochromic film, thereby the aesthetics of the electrochromic film is improved. Moreover, the sum of width a of the groove and groove distance b can be further limited to meet a specific range, the effect of increasing the number of grooves at the edge of the electrochromic film within a same unit length can be achieved, thereby the effect of wrinkle relief is improved, and the wrinkles in the electrochromic film can be further reduced or avoided, the aesthetics of the electrochromic film and the visual experience of users is improved.

In some embodiments of the present application, a plurality of first accommodating grooves and a plurality of second accommodating grooves are provided, so as to form a plurality of first grooves and a plurality of second grooves at the edge of the electrochromic film. Therefore, by providing the plurality of grooves, on the one hand, a plurality of conductive surfaces of the conductive substrate can be exposed through the plurality of grooves, and the electrodes led from the plurality of conductive surfaces are connected to external power sources to improve the electrical conductivity rate of the electrochromic film; on the other hand, the plurality of grooves can provide more space for bending the electrochromic film, the effect of wrinkle relief is further improved and the wrinkles in the electrochromic film is reduced or avoided.

Optionally, the range of b is 0<b≤30mm; Preferably, the range of b is 2mm≤b≤30mm. In general, the distance areas of the grooves refer to the uncut areas of the conductive substrate, electrochromic layer, and the like of the electrochromic film. The probability of wrinkles appearing in these distance areas is higher, and wrinkling is more severe. When the value of distance b is too large, the wrinkles are more obvious or severe. The groove area corresponds to the exposed conductive surface of the conductive substrate, for example, the first groove can expose the conductive surface of the second conductive substrate, and the second groove can expose the conductive surface of the first conductive substrate. Therefore, when the value of the distance b is too small, it is easy to cause electrical connection between the two conductive surfaces, thereby a short circuit is formed. Therefore, by limiting the range of the distance b, which on the one hand can avoid the formation of short circuits in the electrochromic film, and improve the safety and reliability of using the film; on the other hand, by controlling the range of the distance b, the effect of increasing groove width or increasing the number of grooves within a unit length of the edge of the electrochromic film can be achieved, the effect of wrinkle relief is further improved, and the aesthetics and the user experience are enhanced.

Optionally, the range of a is 10mm≤a≤40mm. Furthermore, the range of a is 10mm≤ a≤40mm, and the range of b is 3mm≤b≤30mm. Therefore, by further limiting the range of the width a of the groove and the distance b between grooves, within the unit length of the edge of the electrochromic film, the effect of increasing the number of grooves can be further achieved, thereby the effect of wrinkle relief is further improved, wrinkles in the electrochromic film is reduced or avoided, the aesthetics of the electrochromic film is further improved, and the user experience is enhanced.

Optionally, the sum of a and b satisfies a following relationship: 20mm≤a+b≤40mm. Furthermore, the range of a is 10mm≤a≤20mm, and the range of b is 10mm≤b≤20mm. Therefore, by further limiting the range satisfied by the sum of the width a and the distance b, the number of grooves within the same unit length of the edge of the electrochromic film can be further increased, so as to provide more and more evenly distributed space for the bending of the electrochromic film, the effect of wrinkle relief can be further ensured, so as to further reduce or avoid wrinkles in the electrochromic film, the aesthetics of the electrochromic film is further improved, and the user experience is enhanced. Moreover, by further limiting the width a of the groove and distance b at the same time, it can be further ensured that there are more grooves per unit length of the edge of the electrochromic film, and the distribution of grooves is more uniform, so as to further improve the effect of wrinkle relief.

Optionally, the thickness of at least one of the first conductive substrate and the second conductive substrate is not less than 120µm. Preferably, the thickness of the first conductive substrate and the thickness of the second conductive substrate are both not less than 120µm. More preferably, the thickness of at least one of the first conductive substrate and the second conductive substrate is not less than 150µm. Furthermore, the thickness of the first conductive substrate and the thickness of the second conductive substrate are both not less than 150µm. Therefore, by arranging the thickness values of the conductive substrates meet a specific size, the wrinkle relief effect of the electrochromic film can be further improved, and the aesthetics of the electrochromic film can be further enhanced.

Optionally, the depth of the first groove and the depth of the second groove are both h, where 0<h≤100mm. Preferably, the range of h is 20mm≤h≤80mm. In general, if the depth of the groove is too small, the exposed conductive surface of the conductive substrate is less, which is not conducive to the conductive extraction on the conductive substrate. If the depth of the groove is too large, and the electrochromic layer that is cut off is wider, which results in a narrower electrochromic area of the electrochromic film. Therefore, by limiting the depth of the groove within a certain range can ensure that there is sufficient conductive surface for conductive extraction, and also ensure that the electrochromic film has a sufficiently wide electrochromic area, and the practical area of the film is improved.

Furthermore, an arch height of the electrochromic film along a first direction is H₁, and an arch height of the electrochromic film along a second direction is H₂. The product of H₁ and H₂ satisfies a following relationship: H1 × H2 ≤ 2500mm². Preferably, the first direction is perpendicular to the second direction. More preferably, the first direction and the second direction are parallel to the electrochromic film, respectively. In some application scenarios, the electrochromic film may undergo bending in multiple directions, such as the electrochromic film can be bent along two directions to form a hyperbolic structure. For example, the electrochromic film bends along the first direction to form the arch height H₁, and bends along the second direction to form the arch height H₂; the product of the arch heights in two directions are limited to be within a specific range, especially when the two directions are further defined to be perpendicular to each other, the effect of wrinkle relief can be further improved, and the aesthetics of the electrochromic film can be further enhanced.

Optionally, the first conductive substrate include a first substrate layer and a first conductive layer that are laminated, and the first conductive layer is laminated between the first substrate layer and the electrochromic layer; the second conductive substrate includes a second substrate layer and a second conductive layer that are laminated, and the second conductive layer is laminated between the second substrate layer and the electrochromic layer. Furthermore, the edge of one side of the first conductive substrate away from the electrochromic layer is provided with a first busbar; a portion of the first busbar is located in the first groove and electrically connected to the second conductive layer; the edge of one side of the second conductive substrate away from the electrochromic layer is provided with a second busbar; a portion of the second busbar is located in the second groove and electrically connected to the first conductive layer. Therefore, by arranging a conductive layer on the substrate layer, a conductive substrate can be formed more conveniently. The conductive surface exposed by cutting the grooves is called the conductive layer. The electrical connection is then formed between the first busbar and the exposed second conductive layer, and the electrical connection is formed between the second busbar and the exposed first conductive layer. An external power can introduce voltage or current to the conductive layers through the busbar to form an effective electric field between the electrochromic films, and the electrochromic phenomenon of the electrochromic film can be driven.

Another aspect of the present application also provides an electrochromic glass, which includes glass layers and the above-mentioned electrochromic film. The electrochromic film is laminated between at least two layers of the glass layers. Therefore, by laminating the electrochromic film between the glass layers, the glass layers can provide a good clamping effect onto the electrochromic film, the occurrence of wrinkles on the electrochromic film can be further avoided or reduced, thereby the overall aesthetics of the electrochromic glass is improved.

### BENEFICIAL EFFECTS

The technical solution of the present application has the following advantages: the first groove and the second groove are alternately arranged at the edge of the electrochromic film, so that the electrochromic film is provided with a necessary space for bending through the first groove and the second groove during the bending process of the electrochromic film, so as to greatly reduce or avoid wrinkles at the edge of the electrochromic film, thereby the aesthetics of the electrochromic film is improved. Moreover, the sum of width a of the groove and the distance b between the grooves can be further limited to meet a specific range, the effect of increasing the number of grooves at the edge of the electrochromic film within a same unit length can be achieved, thereby the effect of wrinkle relief is improved, and the wrinkles in the electrochromic film can be further reduced or avoided, the aesthetics of the electrochromic film is improved, and the visual experience of users is improved.

In order to make the above purposes, features, and advantages of the present application more obvious and understandable, the following text will provide preferred embodiments, and together with the attached drawings, provide a detailed explanation as follows.

### BRIEF DESCRIPTION OF THE DRAWINGS

In order to explain the embodiments of the present application more clearly, a brief introduction regarding the accompanying drawings that need to be used for describing the embodiments of the present application below; it is obvious that the accompanying drawings described as follows are only some embodiments of the present application, therefore, they should not be construed as limiting the scope, for those skilled in the art, other drawings can also be obtained according to the current drawings on the premise of paying no creative labor.
FIG. 1 is a schematic structural diagram of an electrochromic film provided in some embodiments of the present application from a perspective view;
FIG. 2 is a sectional diagram of a part A-A in FIG. 1;
FIG. 3 is an enlarged view of a part B in FIG. 2;
FIG. 4 is a schematic structural diagram of a first conductive substrate in an electrochromic film provided in some embodiments of the present application from a perspective view;
FIG. 5 is a schematic structural diagram of an electrochromic layer in an electrochromic film provided in some embodiments of the present application from a perspective view;
FIG. 6 is a schematic structural diagram of a second conductive substrate in an electrochromic film provided in some embodiments of the present application from a perspective view; and
FIG. 7 is a schematic diagram of other structure of an electrochromic film provided in some embodiments of the present application from a perspective view.

The reference signs of main components are listed:
100-electrochromic film; 110-first conductive substrate; 120-electrochromic layer; 130-second conductive substrate; 111-first accommodating groove; 131-second accommodating groove; 121-third accommodating groove; 140-first groove; 150-second groove; 112-first substrate layer; 113-first conductive layer; 132-second substrate layer; 133-second conductive layer; 200- first busbar; 300-second busbar; and 400-sealant.

### DETAILED DESCRIPTION OF EMBODIMENTS

Herein, embodiments of the present application are described in detail, and examples of the embodiment are illustrated in the accompanying figures; wherein, an always unchanged reference number or similar reference numbers represent(s) identical or similar components or components having identical or similar functionalities. The embodiment described below with reference to the accompanying figures is illustrative and intended to illustrate the present application, but should not be considered as any limitation to the present application.

It is noted that when a component is referred to as being "fixed to" or "disposed on" another component, it can be directly or indirectly on another component. When a component is referred to as being "connected to" another component, it can be directly connected to another component or there may be an intermediate component presented at the same time. On the contrary, when a component is referred to as "directly on" another component, there is no intermediate component. The terms "vertical", "horizontal", "left", "right", and similar expressions used in the present application are for illustrative purposes only.

In the present application, unless there is additional explicit stipulation and limitation, terms such as "mount", "connect with each other", "connect", "fix", and so on should be generally interpreted, for example, "connect" can be interpreted as being fixedly connected, detachably connected, or connected integrally; "connect" can also be interpreted as being mechanically connected or electrically connected; "connect" can be further interpreted as being directly connected or indirectly connected through intermediary, or being internal communication between two components or an interaction relationship between the two components. For the one of ordinary skill in the art, the specific meanings of the aforementioned terms in the present application can be interpreted according to specific conditions.

In addition, terms "the first" and "the second" are only used in describe purposes, and should not be considered as indicating or implying any relative importance, or impliedly indicating the number of indicated technical features. As such, technical feature(s) restricted by "the first" or "the second" can explicitly or impliedly comprise one or more such technical feature(s). In the description of the present application, "a plurality of" means two or more, unless there is additional explicit and specific limitation.

Unless otherwise defined, all technical and scientific terms used in the present application have the same meanings as those commonly understood by those skilled in the art of the present application. The terms used in the template specification in the present application are only for the purpose of describing specific embodiments and are not intended to limit the present application. The term "and/or" used in the present application includes any and all combinations of one or more related listed items.

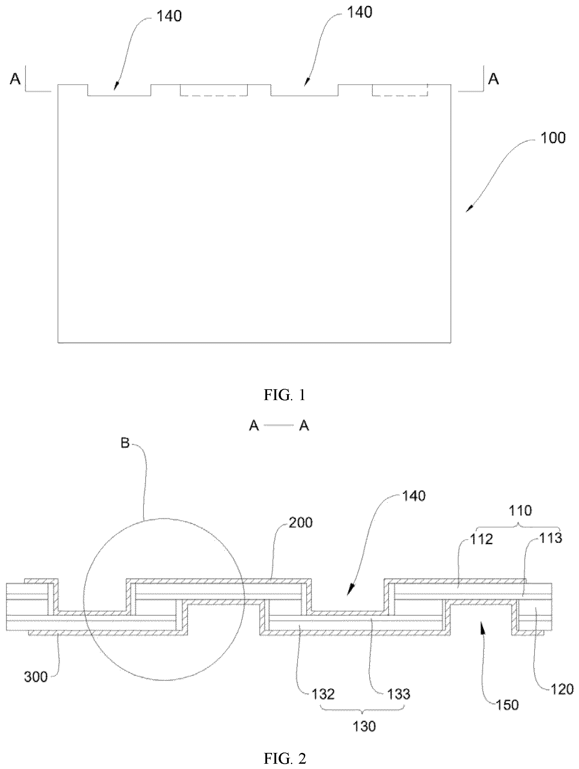

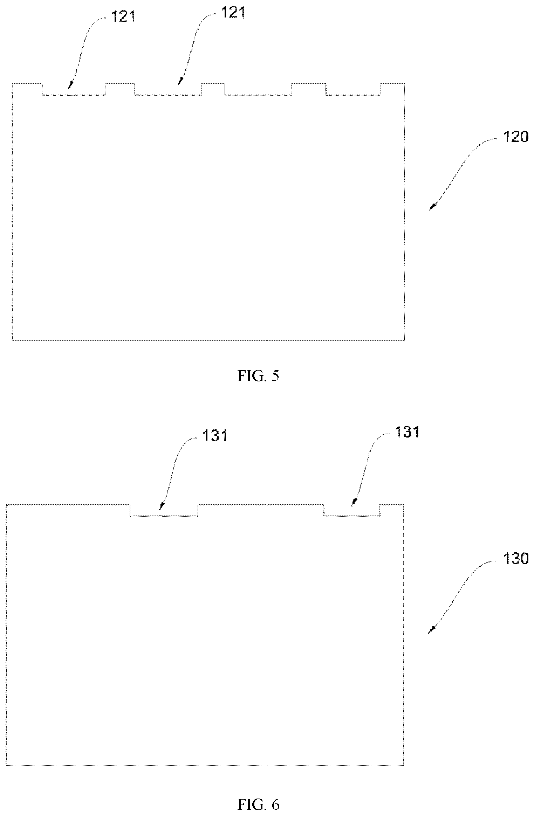

As shown in FIGS. 1 to 6, some embodiments of the present application provide an electrochromic film 100, which is mainly applied in the field of electrochromism, such as in building windows, vehicle windows, and aircraft windows, etc. The electrochromic film 100 includes a first conductive substrate 110, an electrochromic layer 120, and a second conductive substrate 130 that are sequentially laminated.

It should be noted that both the first conductive substrate 110 and the second conductive substrate 130 are completely cover the electrochromic layer 120.

Specifically, the first conductive substrate 110 includes a first substrate layer 112 and a first conductive layer 113 that are laminated, and the first conductive layer 113 is laminated between the first substrate layer 112 and the electrochromic layer 120. The first conductive layer 113 completely covers the electrochromic layer 120.

Meanwhile, the second conductive substrate 130 includes a second substrate layer 132 and a second conductive layer 133 that are laminated, and the second conductive layer 133 is laminated between the second substrate layer 132 and the electrochromic layer 120. The second conductive layer 133 completely covers the electrochromic layer 120.

The first conductive layer 113 and the second conductive layer 133 are respectively used for connecting with an external power source. By connecting the first conductive layer 113 and the second conductive layer 133 to external power sources respectively, an external electric field is formed between the first conductive layer 113 and the second conductive layer 133, thereby stable and reversible color changes in the electrochromic layer 120 under the action of the external electric field are generated.

An edge of the first conductive substrate 110 is provided with a first accommodating groove 111, an edge of the second conductive substrate 130 is provided with a second accommodating groove 131, and an edge of the electrochromic layer 120 is provided with two or more third accommodating grooves 121. It should be noted that the number of the first accommodating grooves 111, the second accommodating grooves 131, and the third accommodating grooves 121 can all be any number of two or more values, which can be arranged according to the actual situation.

It should be noted that the sum of the number of first accommodating grooves 111 and the number of second accommodating grooves 131 is equal to the number of third accommodating grooves 121.

An orthographic projection of the first accommodating groove 111 onto a plane where the electrochromic layer 120 is located overlaps with at least one third accommodating groove 121, and one first accommodating groove 111 and one third accommodating groove 121 are in communication with each other to form a first groove 140.

In addition, an orthographic projection of the second accommodating groove 131 onto the plane where the electrochromic layer 120 is located overlaps with at least one third accommodating groove 121, and one second accommodating groove 131 and one third accommodating groove 121 are in communication with each other to form a second groove 150.

Specifically, the orthogonal projections of the first groove 140 and the second groove 150 onto the plane where the electrochromic layer 120 is located are spaced apart, that is, the first groove 140 and the second groove 150 form a staggered groove structure at the edge of the electrochromic film 100.

In some embodiments of the present application, a plurality of first accommodating grooves 111 and a plurality of second accommodating grooves 131 are provided, so as to form the plurality of first grooves 140 and the plurality of second grooves 150 at the edge of the electrochromic film 100. The number of the first groove 140 and the number of the second groove 150 can be one, two, or more arbitrary numerical values, which can be arranged according to the actual situation.

In addition, the first groove 140 and the second groove 150 can be arranged on either side or multiple sides of the electrochromic film 100, where "multiple sides" refer to any value on two sides or more.

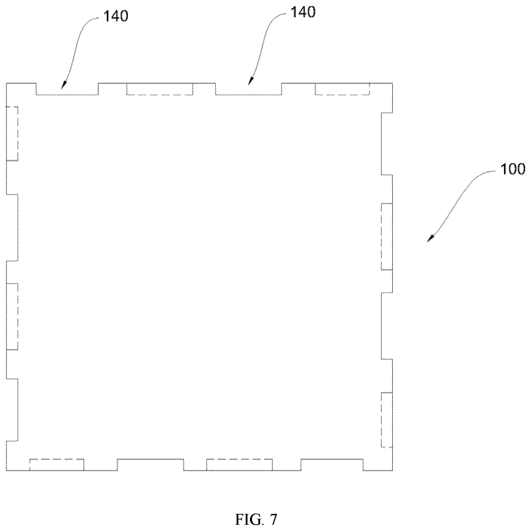

Preferably, as shown in FIG. 7, each side of the edge of the electrochromic film 100 is provided with a plurality of first grooves 140 and a plurality of second grooves 150, so that during the bending process of the edge of the electrochromic film 100, the first grooves 140 and the second grooves 150 are used to provide bending space for the edge of the electrochromic film 100, so as to greatly reduce or avoid wrinkles on the edge of the electrochromic film 100, thereby the aesthetics of the electrochromic film 100 is improved.

It should be noted that the first grooves 140 and the second grooves 150 are staggered at the edge of the electrochromic film 100. Specifically, orthographic projections of any one of the first grooves 140 and any one of the second grooves 150 onto a plane where the electrochromic layer 120 is located have a gap.

Preferably, the width of the first groove 140 and the width of the second groove 150 are both a.

It should be noted that the width of the first groove 140 refers to the length of the first groove 140 located on one side parallel to the edge of the electrochromic film 100 in the direction perpendicular to the thickness of the electrochromic film 100.

The width of the second groove 150 refers to the length of the second groove 150 located on one side parallel to the edge of the electrochromic film 100 in the direction perpendicular to the thickness of the electrochromic film 100.

Furthermore, the distance between orthographic projections of any adjacent the first groove 140 and the second groove 150 onto the plane of the electrochromic layer 120 is b, and the sum of the a and the b satisfies a following relationship: 0<a+b≤100mm.

It can be understood that the sum of the width of the first groove 140 or the width of the second groove 150 and the distance between the orthogonal projections of the adjacent first groove 140 and the second groove 150 onto the plane where the electrochromic layer 120 is located is not greater than 100mm. The range of a+b can be adjusted to adjust the number of grooves at the edge of the electrochromic film 100, and the number of grooves at the edge of the electrochromic film 100 can be increased to avoid wrinkles at the edge of the electrochromic film 100.

Specifically, the range of a+b can be any range selected from a group of: 0<a+b≤100mm, 10mm<a+b ≤ 100mm, 20mm<a+b ≤ 100mm, 30mm<a+b ≤ 100mm, 40mm<a+b ≤ 100mm, 50mm<a+b ≤ 100mm, 60mm<a+b ≤ 100mm, 70mm<a+b ≤ 100mm, 80mm<a+b ≤ 100mm, 90mm<a+b≤100mm, 0<a+b≤90mm, 10mm<a+b≤90mm, 20 mm<a+b≤90mm, 30mm<a+b≤ 90mm, 40mm<a+b≤90mm, 50 mm<a+b≤90mm, 60mm <a+b≤90mm, 70 mm<a+b≤90mm, 80mm<a+b≤90mm, 0<a+b≤80mm, 10mm<a+b≤80mm, 20mm<a+b≤80mm, 30mm<a+b ≤80mm, 40mm<a+b≤80mm, 50mm< a+b≤80mm, 60mm < a+b≤80mm, 70mm < a+b≤ 80mm, 0 < a+b≤70mm, 10mm < a+b ≤70mm, 20mm < a+b≤70mm, 30mm<a+b≤70mm, 40mm<a+b≤70mm, 50mm<a+b≤70mm, 60mm<a+b≤70mm, 0<a+b≤60mm, 10mm<a+b≤ 60mm, 20mm<a+b≤60mm, 30mm<a+b≤60mm, 40mm<a+b≤60mm, 50mm<a+b≤60mm, 0<a+b≤50mm, 10mm<a+b≤50mm, 20mm<a+b≤50mm, 30mm<a+b≤50mm, 40mm<a+b≤ 50mm, 0<a+b≤40mm, 10mm<a+b≤40mm, 20mm<a+b≤40mm, 30mm<a+b≤40mm, 0<a+b≤ 30mm, 0<a+b≤30mm, 10mm<a+b≤30mm, 20mm<a+b≤30mm, 0<a+b≤20mm, 10mm<a+b ≤20mm, and 0<a+b≤10mm; which can be specified according to the actual situation.

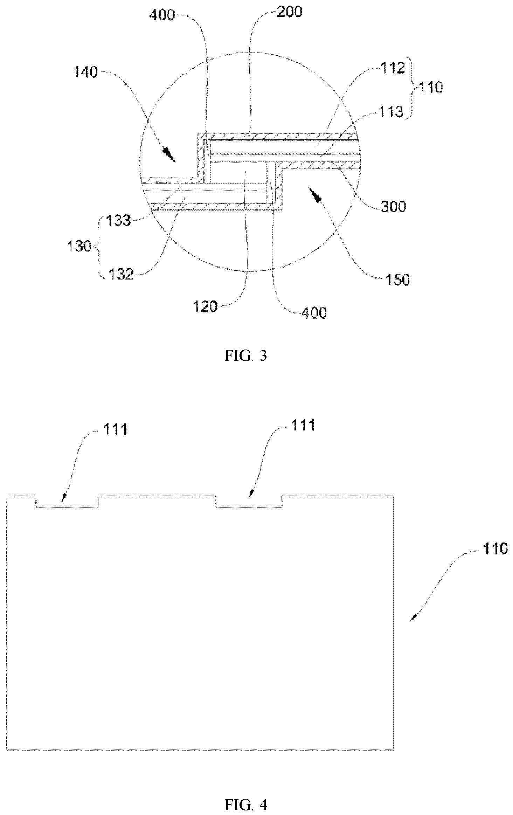

As shown in FIGS. 2 and 3, in some embodiments of the present application, the depth of the first groove 140 and the depth of the second groove 150 are both h, and 0<h≤100mm.

It should be noted that the depth of the first groove 140 is equal to the sum of the thickness of the first conductive substrate 110 and the thickness of the electrochromic layer 120, and the depth of the second groove 150 is equal to the sum of the thickness of the second conductive substrate 130 and the thickness of the electrochromic layer 120.

In some embodiments of the present application, due to the thickness of the first conductive substrate 110 being equal to the thickness of the second conductive substrate 130, the depth of the first groove 140 is equal to the depth of the second groove 150.

Specifically, the range of values for h can be any range selected from a group of: 0<h ≤100mm, 10mm<h≤100mm, 20 mm<h≤100mm, 30mm<h≤100mm, 40 mm<h≤100mm, 50mm<h≤100mm, 60mm<h≤100mm, 70mm<h≤100mm, 80mm<h≤100mm, 90mm<h≤ 100mm, 0<h≤90mm, 10mm<h≤90mm, 20mm<h≤90mm, 30mm<h≤90mm, 40mm<h≤ 90mm, 50mm<h≤90mm, 60mm<h≤90mm, 70mm<h≤90mm, 80mm<h≤90mm, 0<h≤ 80mm, 10mm<h≤80mm, 20mm<h≤80mm, 30mm<h≤80mm, 40mm<h≤80mm, 50mm<h ≤80mm, 60mm<h≤80mm, 70mm<h≤80mm, 0<h≤70mm, 10mm<h≤70mm, 20mm<h≤ 70mm, 30mm<h≤70mm, 40mm<h≤70mm, 50mm<h≤70mm, 60mm<h≤70mm, 0<h≤ 60mm, 10mm<h≤60mm, 20mm<h≤60mm, 30mm<h≤60mm, 40mm<h≤60mm, 50mm<h ≤60mm, 0<h≤50mm, 10mm<h≤50mm, 20mm<h≤50mm, 30mm<h≤50mm, 40mm<h≤ 50mm, 0<h≤40mm, 10mm<h≤40mm, 20mm<h≤40mm, 30mm<h≤40mm, 0<h≤30mm, 10mm<h≤30mm, 20mm<h≤30mm, 0<h≤20mm, 10mm<h≤20mm, and 0<h≤10mm; which can be specified according to actual situations.

It can be understood that in some embodiments of the present application, the depth of the first groove 140 and the depth of the second groove 150 are determined by the thickness of the first conductive substrate 110, the thickness of the second conductive substrate 130, and the thickness of the electrochromic layer 120; that is, increasing or decreasing the thickness of the first conductive substrate 110, the thickness of the second conductive substrate 130, and the thickness of the electrochromic layer 120 can increase or decrease the depth of the first groove 140 and the depth of the second groove 150.

In some embodiments of the present application, the value range of b is 0<b≤30mm.

It should be noted that the range of values for b can be further selected from a group of: 0<b≤30mm, 1mm<b≤30mm, 2mm<b≤ 30mm, 3mm<b≤30mm, 4mm<b≤30mm, 5mm <b≤30mm, 6mm<b≤30mm, 7mm<b≤30mm, 8mm<b≤30mm, 9mm<b≤30mm, 10mm< b≤30mm, 11mm<b≤30mm, 12mm<b≤30mm, 13mm<b≤30mm, 14mm<b≤30mm, 15mm <b≤30mm, 16mm<b≤30mm, 17mm<b≤30mm, 18mm<b≤30mm, 19mm<b≤30mm, 20mm<b≤30mm, 21mm<b≤30mm, 22mm<b≤30mm, 23mm<b≤30mm, 24mm<b≤ 30mm, 25mm<b≤30mm, 26mm<b≤30mm, 27mm<b≤30mm, 28mm<b≤30mm, and 29mm <b≤30mm.

In some embodiments of the present application, the value range of b is 2mm≤b≤30mm.

It should be noted that the range of values for b can be further selected from a group of: 2mm≤b≤30mm, 2mm≤b≤29mm, 2mm≤b≤28mm, 2mm≤b≤27mm, 2mm≤b≤26mm, 2mm≤b≤25mm, 2mm≤b≤24mm, 2mm≤b≤23mm, 2mm≤b≤22mm, 2mm≤b≤21mm, 2mm≤b≤20mm, 2mm≤b≤19mm, 2mm≤b≤18mm, 2mm≤b≤17mm, 2mm≤b≤16mm, 2mm≤b≤15mm, 2mm≤b≤14mm, 2mm≤b≤13mm, 2mm≤b≤12mm, 2mm≤b≤11mm, 2mm≤b≤10mm, 2mm≤b≤9mm, 2mm≤b≤8mm, 2mm≤b≤7mm, 2mm≤b≤6mm, 2mm≤b ≤5mm, 2mm≤b≤4mm, and 2mm≤b≤3mm.

In some embodiments of the present application, the ranges of a and b are 10mm≤a≤ 40mm and 3mm≤b≤30mm, respectively.

It should be noted that the range of a can be any one selected from a group of: 10mm≤ a≤40mm, 15mm≤a≤40mm, 15mm≤a≤35mm, 15mm≤a≤30mm, 15mm≤a≤25mm, 15mm ≤a≤20mm, 20mm≤a≤40mm, 20mm≤a≤35mm, 20mm≤a≤30mm, 20mm≤a≤25mm, 25mm≤a≤40mm, 25mm≤a≤35mm, 25mm≤a≤30mm, 30mm≤a≤40mm, 30mm≤a≤35mm, 35mm≤a≤40mm, 10mm≤a≤35mm, 10mm≤a≤30mm, 10mm≤a≤25mm, 10mm≤a≤20mm, and 10mm≤a≤15mm.

In addition, the range of b can be any one selected from a group of: 3mm≤b≤30mm, 3mm≤b≤29mm, 3mm≤b≤28mm, 3mm≤b≤27mm, 3mm≤b≤26mm, 3mm≤b≤25mm, 3mm≤b≤24mm, 3mm≤b≤23mm, 3mm≤b≤23mm, 3mm≤b≤21mm, 3mm≤b≤20mm, 3mm≤b≤19mm, 3mm≤b≤18mm, 3mm≤b≤17mm, 3mm≤b≤16mm, 3mm≤b≤15mm, 3mm≤b≤14mm, 3mm≤b≤13mm, 3mm≤b≤11mm, 3mm≤b≤10mm, 3mm≤b≤9mm, 3mm ≤b≤8mm, 3mm≤b≤7mm, 3mm≤b≤6mm, 3mm≤b≤5mm, and 3mm≤b≤4mm.

It should be noted that the range of a and b can be a combination of any range of a and any range of b mentioned above.

In some embodiments of the present application, the sum of a and b satisfies the following relationship: the range of a+b is 20mm≤a+b≤40mm.

It should be noted that the range of a+b can be any one selected from a group of: 20mm ≤a+b≤40mm, 25mm≤a+b≤40mm, 25mm≤a+b≤35mm, 25mm≤a+b≤30mm, 30mm≤a+b≤ 40mm, 30mm≤a+b ≤35mm, and 35mm≤a+b≤40mm.

As shown in FIG. 2, in some embodiments of the present application, a=20mm and b=10mm are preferred. At this time, the thickness of the first conductive substrate 110 and the thickness of the second conductive substrate 130 are both 188µm. From Table 1, it can be seen that the wrinkle depth of the electrochromic film 100 ranges from 17mm to 18mm.

**Table 1-wrinkle depth variation of electrochromic film 100**

| Example | No. | a/mm | b/mm | wrinkle depth/mm |
|---|---|---|---|---|
| Reference examples (b>30mm and a+b> 100mm) | 1 | 95 | 40 | 54 |
| | 2 | 85 | 40 | 53 |
| | 3 | 75 | 40 | 50 |
| | 4 | 65 | 40 | 46 |
| Embodiments (0<a+b≤100mm, and 0<b≤ 30mm) | 1 | 50 | 50 | 43 |
| | 2 | 50 | 40 | 39 |
| | 3 | 40 | 40 | 39 |
| | 4 | 40 | 30 | 37 |
| | 5 | 30 | 30 | 29 |
| | 6 | 30 | 20 | 22 |
| | 7 | 20 | 20 | 18 |
| | 8 | 20 | 15 | 18 |
| | 9 | 15 | 15 | 17 |
| | 10 | 15 | 10 | 17 |
| | 11 | 10 | 10 | 17 |

It should be noted that in Table 1, the thickness of the first conductive substrate 110 and the thickness of the second conductive substrate 130 are both 188µm.

Table 1 shows the wrinkle situation of the electrochromic film 100 during bending, with b>30mm and a+b>100mm as a reference example in the embodiment.

Specifically, Table 1 shows that when b=40mm and a+b>100mm, during the process of value of a decreasing from 95mm to 65mm, the wrinkle depth of the electrochromic film 100 gradually decreases from 54mm to 46mm. During this process, as value a decreases, the wrinkle depth of the electrochromic film 100 gradually decreases, but the values of wrinkle depth are not less than 46mm, which are still at a relatively large value.

It can be understood that when a+b>100mm, there is little improvement in the wrinkle depth of the electrochromic film 100 with the change of value of a.

Meanwhile, Table 1 shows that in the embodiment, when 0<a+b≤100mm and 0<b≤ 30mm, as value of a and b gradually decrease, the wrinkle depth at the edge of the electrochromic film 100 changes.

Specifically, in the embodiment, when 0<a+b ≤ 100mm, as the values of a and b gradually decrease, the wrinkle depth of the electrochromic film 100 gradually decreases, and the wrinkle depth is not greater than 43mm. It can be understood that in the present application, the wrinkle depth of the electrochromic film 100 decreases with the decreasing of the values of a and b, that is, with the change of the values of a and b, the wrinkle depth of the electrochromic film 100 can be ameliorated.

It can be seen from Table 1 that when the thickness of the first conductive substrate 110 and the thickness of the second conductive substrate 130 are both 188µm, and 20mm<a+b≤40mm, the wrinkle depth of the electrochromic film 100 remains at a relatively low value, which is between 17mm and 18mm. It can be understood that when 20mm<a+b≤40mm, the amelioration effect on the wrinkle depth of the electrochromic film 100 is the best.

It can be seen from the experimental data shown in Table 1, the wrinkle depths in the embodiments are less then that of in the reference examples, that is, when 0<a+b ≤ 100mm, as values of a and b gradually decrease, the amelioration effect on the wrinkle depth of the electrochromic film 100 is better.

In summary, when the thickness of the first conductive substrate 110 and the thickness of the second conductive substrate 130 are both 188µm, and 0<a+b≤40mm, the amelioration of the wrinkle depth of the electrochromic film 100 is the best.

**Table 2-wrinkle depth variation of electrochromic film 100**

| Example | No. | (thickness of the first conductive substrate or thickness of the second conductive substrate 130)/µm | wrinkle depth/mm |
|---|---|---|---|
| Reference examples | 1 | 60 | 130 |
| | 2 | 80 | 125 |
| | 3 | 100 | 120 |
| Embodiments | 1 | 125 | 110 |
| | 2 | 150 | 60 |
| | 3 | 188 | 19 |
| | 4 | 250 | 15 |
| | 5 | 400 | <15 |

It should be noted that in Table 2, a=20mm and b=20mm.

Table 2 shows the reference examples and embodiments of wrinkle depth of the electrochromic film 100 when a=20mm and b=20mm. Specifically, in the reference examples in Table 2, the thickness of the first conductive substrate 110 and the thickness of the second conductive substrate 130 are both less than 120µm. As the thickness of the first conductive substrate 110 and the thickness of the second conductive substrate 130 gradually increase, the wrinkle depth value of the electrochromic film 100 gradually decreases. However, at this time, the wrinkle depth is still not less than 120mm, that is, the wrinkle depth value of the electrochromic film 100 is relatively larger.

In the embodiments in Table 2, the thickness of the first conductive substrate 110 and the thickness of the second conductive substrate 130 are both not less than 120µm. Meanwhile, when the thickness of the first conductive substrate 110 and the thickness of the second conductive substrate 130 gradually increase, the wrinkle depth value of the electrochromic film 100 gradually decreases.

Specifically, when the thickness of the first conductive substrate 110 and the thickness of the second conductive substrate 130 increase from 125µm to 150µm, the wrinkle of the electrochromic film 100 decreases by 50mm.

In some embodiments of the present application, the thickness of the first conductive substrate 110 and the thickness of the second conductive substrate 130 are both not less than 120µm. It can be understood that the thickness of the first conductive substrate 110 and the thickness of the second conductive substrate 130 can both be any one selected from a group of 125µm, 130µm, 135µm, 140µm, 145µm, 150µm, 155µm, 160µm, 165µm, 170µm, 175µm, 180µm, 185µm, 188µm, 190µm, 195µm, and 200µm.

Furthermore, as shown in Table 2, when the thickness of the first conductive substrate 110 and the thickness of the second conductive substrate 130 increase from 150µm to 188µm, the wrinkle depth of the electrochromic film 100 decreased by 41mm, and at this time, the wrinkle depth of the electrochromic film 100 is 19.

It should be noted that from Table 2, it can be seen that during the process of the thickness of the first conductive substrate 110 and the thickness of the second conductive substrate 130 gradually increase from 120µm to 188µm, the wrinkle depth of the electrochromic film 100 decreases from 110mm to 19mm, and the wrinkle depth of the electrochromic film 100 is greatly reduced. Specifically, the ratio of the increased vale in thickness to the changed value in wrinkle depth is approximately 0.75, the ratio is less than 1, which means that for every 1µm increased in the thickness of the first conductive substrate 110 and the thickness of the second conductive substrate 130, the reduction in wrinkle depth of the electrochromic film 100 is greater than 1mm. It can be understood that at this time, the change in the thickness of the first conductive substrate 110 and the second conductive substrate 130 has a significant effect on the electrochromic film 100. That is, as the thickness of the first conductive substrate 110 and the second conductive substrate 130 increases, the wrinkle depth of the electrochromic film 100 can be significantly ameliorated.

Furthermore, it can be seen in Table 2, during the process that the thickness of the first conductive substrate 110 and the thickness of the second conductive substrate 130 gradually increase from 188µm to 250µm, the wrinkle depth of the electrochromic film 100 decreased from 19mm to 15mm. During this process, the ratio of the increased value in thickness to the changed value in wrinkle depth is 15.5, the ratio is much greater than 1, that is, for every 1µm increased in the thickness of the first conductive substrate 110 and the thickness of the second conductive substrate 130, the reduction in wrinkle depth of the electrochromic film 100 is much less than 1mm. It can be understood that at this time, the change in the thickness of the first conductive substrate 110 and the thickness of the second conductive substrate 130 has a very small effect on the wrinkle depth of the electrochromic film 100. That is, as the thickness of the first conductive substrate 110 and the thickness of the second conductive substrate 130 increases, the change in wrinkle depth of the electrochromic film 100 is very small.

It can be seen in Table 2, the thickness of the first conductive substrate 110 and the thickness of the second conductive substrate 130 gradually increase from 250µm to 400µm, the wrinkle depth of the electrochromic film 100 is less than 15mm. It can be understood that during this process, the ratio of the increased value in the thickness to the changed value in the wrinkle depth is greater than 10, the ratio is far greater than 1. It can be understood that during this process, the change in the thickness of the first conductive substrate 110 and the thickness of the second conductive substrate 130 has very little effect on the wrinkle depth of the electrochromic film 100.

Specifically, when the thickness of the first conductive substrate 110 and the thickness of the second conductive substrate 130 are both 188µm, by gradually increasing the thickness of the first conductive substrate 110 and he thickness of the second conductive substrate 130 results in a smaller change in the wrinkle depth of the electrochromic film 100. It can be understood that at this time, the effect of increasing the thickness of the first conductive substrate 110 and the thickness of the second conductive substrate 130 on the amelioration of wrinkles is very small. Therefore, in the present application, the thickness of the first conductive substrate 110 and the thickness of the second conductive substrate 130 are both 188µm.

Preferably, in some embodiments of the present application, the thickness of the first conductive substrate 110 and the thickness of the second conductive substrate 130 are both not less than 150µm. It can be understood that the thickness of the first conductive substrate 110 and the thickness of the second conductive substrate 130 can both be any one selected from a group of 150µm, 152µm, 154µm, 156µm, 157µm, 160µm, 162µm, 164µm, 166µm, 168µm, 170µm, 172µm, 174µm, 176µm, 178µm, 180µm, 182µm, 184µm, 186µm, 188µm, 190µm, 192µm, 194µm, 196µm, 198µm, and 200µm; which can be arranged according to the actual situation.

In addition, in some embodiments of the present application, the arch height of the electrochromic film 100 along the first direction is H₁, and the arch height of the electrochromic film 100 along the second direction is H₂. The product of H₁ and H₂ satisfies the following relationship: H₁×H₂≤2500mm².

Specifically, arch height H₁ refers to the bending height of the electrochromic film 100 with a length of one meter in the first direction , and arch height H₂ refers to the bending height of the electrochromic film 100 with a length of one meter in the second direction.

The first direction is perpendicular to the second direction. In addition, the first direction and the second direction are perpendicular to the thickness direction of the electrochromic film 100, respectively.

It should be noted that H₁×H₂≤2500mm² refers to H₁×H₂≤2500mm² in each square meter of the electrochromic film 100.

Specifically, the range of H₁×H₂ can be any one selected from a group of H₁×H₂≤ 2500mm², H₁×H₂≤2400mm², H₁×H₂≤2300mm², H₁×H₂≤2200mm², H₁×H₂≤2100mm², H₁ ×H₂≤2000mm², H₁×H₂≤ 1900mm, H₁×H₂≤1800mm², H₁×H₂≤1700mm², H₁×H₂≤ 1600mm², H₁×H₂≤1500mm², H₁×H₂≤1400mm², H₁×H₂≤1300mm², H₁×H₂≤1200mm², H₁ ×H₂≤1100mm², H₁×H₂≤1000mm², H₁×H₂≤900mm², H₁×H₂≤800mm², H₁×H₂≤700mm², H₁×H₂≤600mm², H₁×H₂≤500mm², H₁×H₂≤400mm², H₁×H₂≤300mm², H₁×H₂≤200mm², and H₁×H₂≤100mm².

By reducing the arch height of the electrochromic film 100 in the first direction and the second direction, the wrinkles generated at the edges of the electrochromic film 100 can be alleviated or eliminated, so as to improve the aesthetics of the electrochromic film 100.

In some embodiments of the present application, the shape of the electrochromic film 100 can be any one of polygons, regular polygons, or irregular shapes, which can be arranged according to the actual situation.

The value of a in the electrochromic film 100 can correspond to one value, two values, or multiple values. It should be noted that when the value of a in the electrochromic film 100 only corresponds to one value, that is, the width of each first groove 140 is equal to that of each second groove 150.

When the value of a corresponds to two values, and the corresponding two values of a are defined as a₁ and a₂ respectively, where a₁ is not equal to a₂, and the range of values of a₁ and a₂ is equal to the range of values of a. The width of the first groove 140 and the width of the second groove 150 can be any of the values a₁ and a₂.

When the value of a corresponds to multiple values, and the corresponding multiple values of a are defined as a₁, a₂... aₙ, where the value of n can be an integer greater than 2, and the range of the value of aₙ is equal to that of a.

It can be understood that the value of the first groove 140 can be any value in a₁, a₂... aₙ, and the value of the second groove 150 can be any value in a₁, a₂... aₙ, which can be arranged according to the actual situation.

In addition, the value of b in the electrochromic film 100 can correspond to one or more values. It should be noted that when the value of b of the electrochromic film 100 only corresponds to one value, that is, the distance between the orthographic projections of any adjacent first groove 140 and the second groove 150 on the plane of the electrochromic layer 120 is equal.

When the value of b corresponds to multiple values, and the corresponding multiple values of b are defined as b₁, b₂... bₙ, where n can be an integer of any value not less than 2, and the range of values of bₙ is equal to that of b. That is, the distance between the orthographic projections of any adjacent first groove 140 and the second groove 150 on the plane of the electrochromic layer 120 can be any one of b₁, b₂... and bₙ, which can be arranged according to the actual situation.

The wrinkle depth of the electrochromic film 100 described in the present application refers to the wrinkle depth at the edge of the electrochromic film 100.

As shown in FIGS. 2 and 3, in some embodiments of the present application, a periphery of each first groove 140 and a periphery of each second groove 150 are provided with a sealant 400, respectively.

The second conductive substrate 130 is fixed by a sealing layer arranged in the periphery of the first groove 140, and the electrochromic layer 120 opposite the first groove 140 is separated from the external air and water. The first conductive substrate 110 is fixed by a sealing layer arranged in the periphery of the second groove 150, and the electrochromic layer 120 opposite the second groove 150 is separated from the external air and water to improve the stability of the electrochromic layer 120.

It should be noted that the sealant 400 is a high-temperature adhesive, which is mainly made of components such as silicoaluminate and inorganic ceramic powder, etc., and is a high-temperature adhesive that meets different temperature resistance requirements. The temperature resistance ranges from 200°C to 1800°C.

As shown in FIG. 2, in some embodiments of the present application, a first busbar 200 is provided at an edge of one side of the first conductive substrate 110 away from the electrochromic layer 120, and the first busbar 200 is laminated on the edge of the side of the first conductive substrate 110 away from the electrochromic layer 120.

Specifically, a portion of the first busbar 200 is located in the first groove 140, and the first busbar 200 located in the first groove 140 forms a "concave" shape in the first groove 140; and a portion of the first busbar 200 located in the first groove 140 is adhered to the sealant 400 on the inner wall of the first groove 140 to fix the first busbar 200 through the sealant 400 and improve the stability of the first busbar 200 on the first conductive substrate 110. In addition, a portion of the first busbar 200 located at the bottom of the first groove 140 is electrically connected to a portion of the second conductive layer 133 exposed in the first groove 140.

Meanwhile, a second bus bar 300 is provided at an edge of one side of the second conductive substrate 130 away from the electrochromic layer 120, and the second bus bar 300 is laminated on the edge of the side of the second conductive substrate 130 away from the electrochromic layer 120.

Specifically, a portion of the second busbar 300 is located in the second groove 150, and the second busbar 300 located in the second groove 150 forms a "concave" shape in the second groove 150; and a portion of the second busbar 300 located in the second groove 150 is adhered to the sealant 400 on the inner wall of the second groove 150 to fix the first busbar 200 through the sealant 400 and improve the stability of the first busbar 200 on the first conductive substrate 110. In addition, a portion of the second busbar 300 located at the bottom of the second groove 150 is electrically connected to a portion of the first conductive layer 113 exposed in the second groove 150.

It should be noted that the first busbar 200 and the second busbar 300 are electrically connected to the external power source respectively, so that an external electric field is formed between the first conductive layer 113 and the second conductive layer 133, so that the electrochromic layer 120 in the electrochromic film 100 undergoes stable and reversible color changes under the action of the external electric field.

Other embodiments of the present application further provide an electrochromic glass, which includes glass layers and an electrochromic film 100 as described in any of the above embodiments.

The electrochromic film 100 is laminated between at least two layers of the glass layers.

In the embodiment, the electrochromic film 100 is laminated between two glass layers to form the electrochromic glass.

It should be noted that the two glass layers completely cover the electrochromic film 100.

In all the examples shown and described here, any specific value should be interpreted as merely illustrative and not as a limitation, therefore, other examples of exemplary embodiments may have different values.

It should be noted that similar reference signs and letters represent similar terms in the following figures. Therefore, once a term is defined in one figure, it does not need to be further defined or explained in subsequent figures.

The above embodiments only express several embodiments of the present application, and the description is more specific and detailed, but cannot be understood as a limitation on the scope of the present application. It should be pointed out that for those skilled in the art, several modifications and improvements can be made without departing from the concept of the present application, all of which fall within the scope of protection of the present application.

## Claims

1. An electrochromic film, comprising:
a first conductive substrate, an electrochromic layer, and a second conductive substrate laminated sequentially;
wherein an edge of the first conductive substrate is provided with a first accommodating groove, an edge of the second conductive substrate is provided with a second accommodating groove, and an edge of the electrochromic layer is provided with two or more third accommodating grooves;
an orthographic projection of the first accommodating groove onto a plane where the electrochromic layer is located overlaps with at least one third accommodating groove, and the first accommodating groove and the third accommodating groove are in communication with each other to form a first groove;
an orthographic projection of the second accommodating groove onto the plane where the electrochromic layer is located overlaps with at least one third accommodating groove, and the second accommodating groove and the third accommodating groove are in communication with each other to form a second groove;
the first groove and the second groove are alternately arranged at an edge of the electrochromic film; and
both the width of the first groove and the width of the second groove are a, and a distance between orthographic projections of any adjacent first groove and second groove onto the plane of the electrochromic layer is b, wherein a sum of the a and the b satisfies a following relationship: 0<a+b≤100mm.

2. The electrochromic film according to claim 1, **characterized in that** a range of the b is 0<b ≤30mm.

3. The electrochromic film according to claim 1, **characterized in that** a range of the b is 2mm ≤b≤30mm.

4. The electrochromic film according to claim 1, **characterized in that** a range of a is 10mm≤ a≤40mm, and a range of b is 3mm≤b≤30mm.

5. The electrochromic film according to claim 1, **characterized in that** the sum of the a and the b satisfies a following relationship: 20mm≤a+b≤40mm.

6. The electrochromic film according to claim 1, **characterized in that** none of the first conductive substrate and the second conductive substrate has a thickness less than 120µm.

7. The electrochromic film according to claim 1, **characterized in that** both the depth of the first groove and the depth of the second groove are h, and 0<h≤100mm.

8. The electrochromic film according to claim 1, **characterized in that** an arch height of the electrochromic film along a first direction is H₁, and an arch height of the electrochromic film along a second direction is H₂, wherein a product of H₁ and H₂ satisfies a following relationship:H₁×H₂ ≤2500mm², and the first direction is perpendicular to the second direction.

9. The electrochromic film according to claim 1, **characterized in that** an edge of one side of the first conductive substrate away from the electrochromic layer is provided with a first busbar;
a portion of the first busbar is located in the first groove and is electrically connected to the second conductive substrate;
an edge of one side of the second conductive substrate away from the electrochromic layer is provided with a second busbar; and
a portion of the second busbar is located in the second groove and is electrically connected to the first conductive substrate.

10. An electrochromic glass, comprising glass layers and the electrochromic film according to any one of claims 1-9; and
the electrochromic film is laminated between at least two layers of the glass layers.
